# EUROPEAN PATENT APPLICATION

(11) **EP 4 344 866 A1**
(43) Date of publication of application: **03.04.2024**
(21) Application number: 22199184.7
(22) Date of filing: 30.09.2022
(51) Int. Cl.: B29D 99/00, B29C 65/00, F03D 1/06, B29C 70/44, C08J 5/24, C08G 61/06, B29L 31/08

(54) **RESIN JOINING PORTION FOR WIND TURBINE BLADES**

(71) Applicant: Siemens Gamesa Renewable Energy A/S, 7330 Brande (DK)
(72) Inventor: Chiesura, Gabriele, 9000 Aalborg (DK); Lee, Jotham, 9000 Aalborg (DK); Sjoelund, Jonas Heidemann, 9400 Nørresundby (DK); Stecher, Harald, 9520 Skørping (DK)
(74) Representative: SGRE-Association

(57) **Abstract**

A method for manufacturing a structural element (20) of a wind turbine blade (3), the method comprising:
- arranging a first segment (21) and a second segment (22) of the structural element (20) adjacent to each other;
- arranging a joining portion (23) between the first segment (21) and the second segment (22), wherein the joining portion (23) is made of or comprises a fibre lay-up (25);
- encapsulating the joining portion (23) and, at least partially, the adjacent segments (21, 22) in a vacuum bag(27);
- applying vacuum to the vacuum bag (27) for pulling together the first segment (21), the second segment (22) and the joining portion (23);
- infiltrating the fibre lay-up (25) with polyurethane resin (30) and/or ring-opening metathesis polymerization resin (30);
- curing the resin (31).

## Description

### Field of invention

The present invention relates to a method for manufacturing a structural element of a wind turbine blade by using a resin joining portion and to a structural element of a wind turbine blade comprising a resin joining portion.

### Art Background

In the prior art, manufacturing methods for manufacturing structural elements of wind turbine blades are known. Such methods comprise the step of arranging two segments of the structural elements adjacent to each other, placing a joining portion made of or comprising a fibre lay-up between the structural elements and infiltrating the joining portion with a resin, normally an epoxy resin, or an adhesive component and then cure the resin or the adhesive component.

Problematic in the prior art is that the resin or the adhesive component does not infiltrate the fibre lay-up deeply enough for providing a reliable joint between the segments forming the structural element. Therefore, the joining portion must have a high aspect ratio, defined as the ratio between the length and the height of a scarf or ramp portion of a fibre lay-up or, once infused, a laminate, for guaranteeing enough mechanical stability of the joining portion. Furthermore, the joining portion has places in which the resin or the adhesive component does not infiltrate properly, so that such places represent weak points for the joining portion overall.

### Summary of the invention

There may therefore be a need for a manufacturing method of structural elements of wind turbines overcoming the aforementioned problems.

This need may be met with a manufacturing method according to the present invention.

According to a first aspect of the present invention, a method for manufacturing a structural element of a wind turbine blade is provided. The method comprises a first step of arranging a first segment of the structural element and a second segment of the structural element adjacent to each other and of arranging a joining portion between the first segment and the second segment, wherein the joining portion is made of or comprises a fibre lay-up. The joining portion and the adjacent segments, these at least partially, are then covered by or encapsulated in a vacuum bag so as to create an environment in which a vacuum can be established. After this second step, vacuum is applied to the vacuum bag for pulling together the first segment, the second segment and the joining portion and, after the application of the vacuum, the fibre lay-up is infiltrated with polyurethane (PU) resin and/or with ring-opening metathesis polymerization (ROMP) resin. After the infiltration is performed, the resin is cured to obtain the structural element.

According to the present document, a "fibre lay-up" is a stack of layers comprising fibres in dry condition. The fibres may e.g. be comprised in fiber mats, also called fibre fabrics or just be fibre rovings not comprised in such a mat. The "fibre lay-up" may also be referred to as "dry joint laminate" or "dry fibre laminate". Once the "fibre layup" is infiltrated with resin and the resin has cured, a "laminate" or "infused laminate" or "fibre reinforced laminate" is built. In general, as a matrix material for embedding such a fibre lay-up or such dry fibers, an epoxy resin is used. The term "infiltrating with resin" is used herein, wherein this may mean infusing with resin or wetting with resin.

According to an embodiment of the present invention, the fibers may be in particular one or more of glass fibers, carbon fibers, aramid fibers and natural fibers.

Such fibers provide good structural properties of the structural element by having a low weight impact on the structural element itself.

According to the present document, the term "vacuum bag" refers to a bag or foil enclosing a space within itself and having sealings, for obtaining a vacuum region within the enclosed space.

The vacuum bag encloses the joining portion and the first and second segment of the structural element, so as to create an evacuated region around them to pull the components of the structural elements better together and thus ensure a better quality of the joint comprising the first segment, the second segment and the joining portion.

Therefore, according to the present invention, the segments of the structural element and the joining portion are arranged together and, after applying a vacuum to a region comprising the joining portion and at least partially both segments, the fibre lay-up of the joining portion is infiltrated with a PU and/or a ROMP resin, which is then cured to provide stability to the joint.

Due to the lower viscosity of such resins used with respect to the state of the art, it is therefore possible to infiltrate the fibre lay-up of the joining portion in a faster and more diffuse manner.

For example, both the PU resin as well as the ROMP resin have a viscosity being 3 to 5 times less than the viscosity of the epoxy resin and the infiltration time is thus reduced up to 50%.

Moreover, PU and ROMP resin infiltrate the fibre lay-up in a more diffuse manner, thus avoiding regions in which the resin does not flow. The diffusion of the PU and ROMP resin is enhanced by the application of vacuum in the region around the joining portion and the segments of the structural element. It is also possible to infuse thicker fibre lay-ups without the risk of having dry spots due to insufficient diffusion of the resin.

This is mainly because the higher viscosity of an epoxy resin system does not allow the resin to wet the dry fiber fast enough through the fibre lay-up or dry joint laminate thickness, compared to the in-plane direction, resulting in isolated dry spots where the laminate thickness increases a lot, such as the beam of a joint blade. In general, a lower viscosity resin will run
through the fibre lay-up more smoothly and ensure a uniform resin flow front through the laminate thickness even for thick fibre lay-ups.

Another advantage, is that the unique mechanical properties of the PU and ROMP resins, showing in some cases a fracture toughness 2-5 times the one of epoxy, allow to shorten the ply-drops between adjacent plies and to reduce the geometry of the joint tapering. This could also be applied to repairs in blade serial production, thus reducing the amount of material that is added per each repair where the original laminate needs to be grinded off.

Another advantage of the PU and ROMP resin systems is the almost total insensitivity to heating (cooling) ramp-up (down) after curing. In fact, with a conventional epoxy resin system, if the curing cycle is shortened by 30-50%, then a significant drop in mechanical properties is seen in the cured composite laminate. However, this does not seem to be the case for a PU or a ROMP resin system and, as a result, the curing cycle could be reduced by up to 50% for the specific application of the joining.

The advantages according to the first aspect of the present invention can therefore be summarized as providing a resin system with a lower viscosity for a better infiltration of the fibre lay-up in the joining portion and, at the same time, to provide a tougher and yet shorter joint with a fast curing, or in other words, with a short curing time.

According to an embodiment, a catalyst is admixed to the resin before infiltrating. By adding a catalyst, the curing process can be made more efficient.

According to an embodiment, an organo-metallic based catalyst is used. Organo-metallic catalysts are particularly used with ROMP resin systems and increase the rate of the polymerization process of the ROMP resin.

According to an embodiment, the organo-metallic based catalyst is a Ruthenium- or an Osmium-based catalyst or it comprises one or both of a Ruthenium- or an Osmium-based catalyst.

According to an embodiment, a protection layer is applied to the joining portion after the curing of the resin. Thus, the joining portion can be effectively protected against external agents such as humidity once the resin is cured. This is particularly useful if the joining portion is placed on an external part of the blade. The protection layer may be a hydrophobic material e.g. a paint, a film or a foil layer at least covering the joining portion. Especially if applied to an exterior part of the blade, the joining portion may be covered with such protection layer, possibly also using a filler material either on its own as a protection layer or initially before e.g. a paint, film or foil protective layer is placed on top of the filler, to ensure a smooth and preferably flush area at and around the joining portion. This is to maintain the optimal airflow across the joining portion when the blade is in operation.

According to an embodiment, between the joining portion and at least one of the first segment and the second segment there is a spacer for spacing the joining portion and the at least one of the first segment and the second segment. Therefore, it is possible to space the components of the structural element on the one side and the joining portion on the other side apart from each other, thus allowing the resin to better permeate a space between the joining portion and the at least one of the first segment and the second segment for improving the quality of the joint.

According to an embodiment, a tapering ratio of at least one fibre lay-up portion of the joining portion is less than 30:1.

According to the present document, a "tapering ratio" is a ratio between a length of the fibre lay-up or, once infused, the laminate and a thickness of the fibre lay-up itself, or once infused, the laminate itself in a scarf or ramp portion of the fibre lay-up or the final laminate, repectively.

Therefore, it is possible to use smaller tapering ratios for the joining portion as with respect to the prior art. This is also advantageous for providing shorter joints having smaller tapering ratios.

According to an embodiment, at least one of the first segment and the second segment have a tapered region for accommodating, at least partially, the joining portion. Thus, it is possible to have a recess for accommodating the joining portion. This may be advantageous when the joining portion is located inside a cavity defined by the first segment and the second segment, when arranged adjacent to each other, as external surface finishings of the first segment and the second segment composing the structural element can be performed prior to placing the joining portion. The size of the joining portion is preferably dimensioned so that it fits within the cavity, e.g. height, width and/or length of the joining portion adapted according the dimensions of the cavity it is to be placed in. In this respect, preferably the joining portion is dimensioned taking into account any spacers placed in the cavity in advance of placing the joining portion and/or expansion or contraction of either of the first or second segment and/or the joining portion itself during the joining process e.g. application of pressure/vacuum, resin infiltration or resin curing.

According to an embodiment, the method further comprises a step of mechanically connecting at least two of the first segment, the second segment and the joining portion before the fibre lay-up is infiltrated with the resin.

In the present document, the term "mechanically joining" refers to fixing at least two parts with each other by using mechanical means, such as screws, bolts, rivets, dovetail joints and the like.

By mechanically joining at least two of the components of the structural element prior to the infiltrating step, the quality of the resulting joint is improved.

The manufacturing method according to the first aspect of the present invention as well as to the embodiments discussed above can be used for manufacturing different structural elements of a wind turbine blade.

According to an embodiment, at least one of the first segment and the second segment is a spar web cap, also commonly referred to as spar cap.

According to a further embodiment, at least one of the first segment and the second segment is a spar web element, commonly referred to as a shear web.

According to another embodiment, the first segment and the second segment are both, spar web caps. These spar web cap segments may be comprised in separate blade sections, and when joining the blade sections together, the joint may accordingly be established across the two adjacent, and preferably aligned, web cap segments using the joining portion. Similar, yet not necessarily limited to spar web caps already located in separate blade sections, a joint using the joining portion may also be established across two web cap segments to extend the length of e.g. the first segment with the length of the second segment, e.g. prior to using the joined web cap segments in a blade casting process.

According to yet another embodiment, the first segment is a turbine blade inboard part and the second segment is a turbine blade outboard part. These inboard and outboard parts when joined to each other may provide a turbine blade substantially in its intended full length. In alternative or in addition thereto, the turbine blade inboard part and/or the turbine blade outboard part may in turn be segmented. Thus, either one or both of the first segment and second segment may be a segment of an inboard or an outboard blade turbine part. For a blade comprising multiple segments, at least one joint between adjacent segments is established according to the present method.

Thus, by example, a blade may be comprised of three or more individual blade segments that are assembled using the present method for at least one of the two or more blade segment joints. Accordingly, and by example, an intermediate outboard blade segment may be joined to an inboard blade segment as to prepare a new blade inboard segment eventually to be jointed to a further outboard segment, the further outboard segment comprising, for example, a blade tip that terminates the blade. A similar approach may be used for joining an intermediate blade inboard segment to an outboard blade segment, the outboard blade segment comprising, for example, a blade tip that terminates the blade, so as to create a new outboard segment eventually to be joined with another inboard segment.

Hence, the outboard end portion of the outboard blade segment may comprise a blade tip terminating the assembled blade or, in case it is an intermediate outboard blade segment, may be configured to be attached to yet another outboard blade segment. Likewise, the inboard end portion of the inboard blade segment may comprise a root portion configured to be attached to the rotor hub or, in case it is an intermediate inboard segment, may be configured to be attached to yet another inboard blade segment.

If the first segment is a turbine blade inboard part or a segment thereof and the second segment is a turbine blade outboard part or a segment thereof, then it is possible that the joining portion is arranged in a cavity defined by the first segment and the second segment when placed or arranged adjacent to each other. Moreover, if the first segment and the second segment are both representing a spar web cap and both are aligned and placed opposite one another, a joint may accordingly be established between the two spar web cap segments by the joining portion arranged in a cavity defined by the first spar web cap segment and the second spar web cap segment.

Thus, it is possible to place the joining portion inside of the above-mentioned cavity and thus protecting the joining portion from external disturbing factors, such as humidity. In other words, since the cavity may be located at an inner side of the segments to be joined, the joining portion is located inside of the final blade and thus is very much protected e.g. from humidity, impacting particles and other external disturbing factors.

According to a second aspect of the present invention, a wind turbine blade comprising at least one structural element manufactured according to the first aspect of the present invention is provided.

The method features related to the first aspect of the present invention can be applied as well to the wind turbine blade according to the second aspect of the present invention.

The aspects defined above and further aspects of the present invention are apparent from the examples of embodiments to be described hereinafter and are explained with reference to the examples of embodiments. The invention will be described in more detail hereinafter with reference to examples of embodiments but to which the invention is not limited.

### Brief Description of the Drawing

- Figure 1: shows a wind turbine according to an embodiment of the invention.
- Figure 2: shows a top view of a structural element according to an embodiment of the present invention.
- Figure 3: shows a section view along the line III-III of Figure 2 during the manufacturing process according to an embodiment of the first aspect of the present invention.
- Figure 4: shows represent a section view of the structural element along the line III-III of Figure 2 according to an embodiment of the first aspect of the present invention after the curing process.
- Figure 5: schematic view of the method for manufacturing the structural element of a wind turbine blade according to an embodiment of the present invention.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

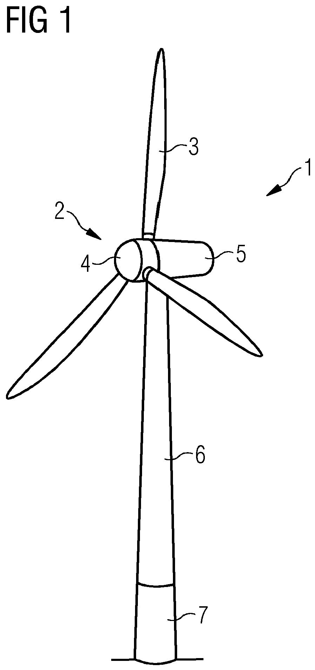

**Figure** 1 shows a wind turbine 1 according to an embodiment of the invention. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete based foundation, and if the wind turbine 1 is placed in a marine environment the foundation 7 may be a monopile, tripod, jacket, gravity or floating foundation. The foundation 7 is connected to and/or driven into the ground or seabed if directly bottom fixed and for a floating foundation mooring lines are usually placed between foundation and the seabed.

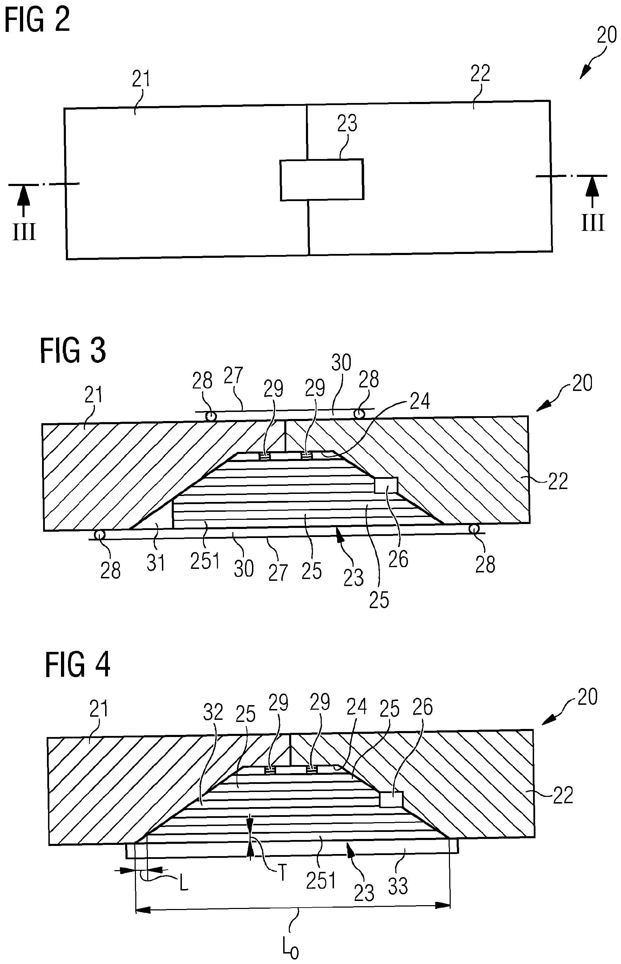

**Figure 2** shows a top view of a structural element 20. The structural element 20 comprises a first segment 21, a second segment 22 and a joining portion 23.

The structural element 20 according to **Figure 2** can be composed by an outboard and an inboard part of a wind turbine blade 3, by a tip and a root of a wind turbine blade or by a spar and a web cap of a wind turbine blade 3.

In **Figure 3** a section view along the line III-III of **Figure 2** is shown during the manufacturing process according to an embodiment of the first aspect of the present invention.

In the embodiment of **Figure 3****,** both the first segment 21 and the second segment 22 have a tapered recess 24 for accommodating the joining portion 23. Furthermore, spacers 29 are placed between the joining portion 23 and each of the first segment 21 and the second segment 22.

The joining portion 23 is made of a plurality of fibre lay-up portions 25, which are laminated one on top of the other. The fibre lay-up portions 25 can be made of or can comprise different materials, such as, for example, glass fibers, carbon fibers or natural fibers. The bottommost fibre lay-up portion 251 has a length L₀ and a thickness T of the fibre lay-up 25 forming the joining portion 23. The scarf portion of the fibre lay-up 251 has a length L. The ratio between the length L of the scarf portion and the thickness T of the fibre lay-up 251 is defined as tapering ratio. Thanks to the lower viscosity of PU and ROMP resins, it is possible to design joining portions 23 with a tapering ratio being lower than 30:1 (see **Figure 4****).**

A mechanical means 26 such as a screw, a rivet, a bolt or the like, is used for mechanically connecting the joining portion 23 with the second section 22. It might however also be the case, that the mechanical means 26 or a plurality thereof is used for mechanically connecting at least two of the first segment 21, the second segment 22 and the joining portion 23.

A particularly advantageous embodiment comprises mechanical means 26, wherein the mechanical means are dovetail joints, as such mechanical means are particularly reliable once being implemented.

A vacuum bag 27 encapsulates the joining portion 23 and at least partially the first segment 21 and the second segment 22. Sealing elements 28 are provided for sealing the vacuum bag 27 against outer surfaces of the first segment 21 and the second segment 22, so as to create a room 30, to which the vacuum can be applied during the manufacturing method.

Also, in **Figure 3** it can be seen the PU resin and/or ROMP resin 31 during the infiltration of the fibre lay-up 25 composing the joining portion 23.

**Figure 4** also represent a section view of the structural element 20 along the line III-III of **Figure 2****.**

In **Figure 4** the structural element 20 is already after the curing of the resin 31. The laminate portions 25 impregnated with the resin 31 form an impregnated joining portion 32. Where the spacers 29 where placed, there is only cured resin 30.

Furthermore, in the embodiment according to **Figure 4****,** there is a protective layer 33. The protective layer 33 is applied after the curing step and is used for protecting the joining portion from external agents, such as humidity or chemical agents. For example, the protective layer 33 can comprise a hydrophobic material.

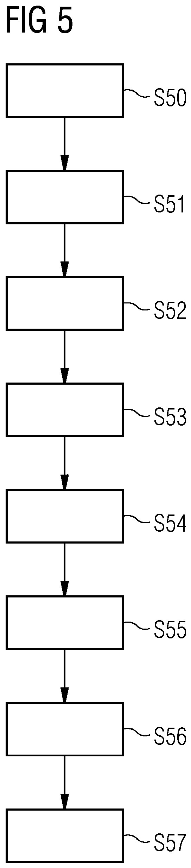

**Figure 5** shows a schematic view of the method for manufacturing the structural element 20 of a wind turbine blade 3.

In step S50, the first segment 21 and the second segment 22 are arranged adjacent to each other.

In a second step S51, the joining portion 23 is arranged between the first segment 21 and the second segment 22. The joining portion 23 is arranged in a lodging place formed by the recesses 24 of the first segment 21 and the second segment 22.

Also, the joining portion 23 is mechanically connected with the second segment 22 by means of the mechanical means 26, which can be a screw, a rivet, a bolt or the like.

In a third step S52, the vacuum bag 27 is used to encapsulate the joining portion 23 and at least partially the first segment 21 and the second segment 22. The vacuum bag 27 comprises sealing elements 28 for sealing the vacuum bag against the outer surfaces of the first segment 21 and of the second segment 22.

In a fourth step S53, a vacuum is applied to the vacuum bag 27. Therefore, in this step, the room 30 is evacuated from air and the first section 21, the second section 22 and the joining portion 23 are pulled together to improve the joint.

In a fifth step S54, the resin 31, which might either be a PU resin or a ROMP resin, is admixed with a catalyst(s), such as an organo-metallic catalyst such as a Ruthenium or Osmium based organo-metal complex or mixtures of either or both, in particular a Ruthenium-based catalyst.

By adding a catalyst to the resin 31, it is possible to improve the curing process of the resin 31.

In a sixth step S55, the fibre lay-up portions 25 of the joining portion 23 are infiltrated with the resin 31.

After the fibre lay-up or fibre lay-up portions 25 are infiltrated, the resin 31 is cured to provide a stiff joint between the first section 21 and the second section 22 of the structural element 20 (step S56).

The impregnated laminates 25 form, after curing, an impregnated joining portion 32, which provides a stable, stiff and reliable joint to the structural elements.

At the end, the vacuum is removed and the vacuum foil or bag is taken away, so that the protection layer 33 can be applied to the top of the joining portion 23 (step S57).

## Claims

1. A method for manufacturing a structural element (20) of a wind turbine blade (3), the method comprising:
- arranging a first segment (21) of the structural element (20) and a second segment (22) of the structural element (20) adjacent to each other;
- arranging a joining portion (23) between the first segment (21) and the second segment (22), wherein the joining portion (23) is made of or comprises a fibre lay-up (25);
- encapsulating the joining portion (23) and, at least partially, the adjacent segments (21, 22) in a vacuum bag (27);
- applying vacuum to the vacuum bag (27) for pulling together the first segment (21), the second segment (22) and the joining portion (23);
- infiltrating the fibre lay-up (25) with a polyurethane resin (30) and/or a ring-opening metathesis polymerization resin (30);
- curing of one or both resins (31).

2. Method of claim 1, wherein a catalyst is admixed to the of one or both resins (30) prior to infiltrating the fibre lay-up (25).

3. Method of claim 2, wherein an organo-metallic based catalyst is used.

4. Method of claim 3, wherein the organo-metallic based catalyst is at least one of a Ruthenium- and/or an Osmium based catalyst.

5. Method of any of the preceding claims further comprising:
- applying a protection layer (33) to the joining portion (23) after curing of the of one or both resins.

6. Method of any of the preceding claims, wherein between the joining portion (23) and at least one of the first segment (21) and the second segment (22) a spacer (29) is placed for spacing the joining portion (23) and the at least one of the first segment (21) and the second segment (22) from each other.

7. Method of any of the preceding claims, wherein the lay-up comprises several lay-up portions, wherein a tapering ratio of at least one lay-up portion (251), in particular a bottommost layup portion, is less than 30:1, wherein the tapering ratio is defined as the ratio between a length (L) of a scarf portion of the lay-up (251) and the thickness (T) of the lay-up (25).

8. Method of any of the previous claims, wherein the lay-up (25) is made of or comprises at least one of glass fibers, carbon fibers, aramid fibers or natural fibers.

9. Method of any of the previous claims, wherein at least one of the first segment (21) and the second segment (22) has a tapered region forming a recess (24) for accommodating, at least partially, the joining portion (23).

10. Method of any of the previous claims, further comprising a step of mechanically connecting by means of mechanical means (26) at least two of the first segment (21), the second segment (22) and the joining portion (23) before the fibre lay-up (25) is infiltrated with the resin or resins.

11. Method of any of the previous claims, wherein at least one of the first segment (21) and the second segment (22) is a spar web cap.

12. Method of any of the previous claims, wherein at least one of the first segment (21) or the second segment (22) is a spar web element.

13. Method of any of the previous claims, wherein the first segment (21) is a turbine blade inboard part or a segment thereof and the second segment (22) is a turbine blade outboard part or a segment thereof.

14. Method of claim 12 or 13, wherein the joining portion is arranged in a cavity defined by the first segment (21) and the second segment (22) when placed adjacent to each other.

15. Wind turbine blade (3) comprising at least one structural element (20) manufactured according to one of claims 1 to 14.
